(19) Europäisches Patentamt / European Patent Office / Office européen des brevets

(11) **EP 4 621 885 A1**

(12) **EUROPEAN PATENT APPLICATION**
published in accordance with Art. 153(4) EPC

(43) Date of publication:
**24.09.2025 Bulletin 2025/39**

(21) Application number: **22965568.3**

(22) Date of filing: **18.11.2022**

(51) International Patent Classification (IPC):
**H01M 4/66** $^{(2006.01)}$

(52) Cooperative Patent Classification (CPC):
**H01M 4/66**

(86) International application number:
**PCT/CN2022/132839**

(87) International publication number:
**WO 2024/103387 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Yangzhou Nanopore Innovative Materials Technology Ltd**
**Yangzhou, Jiangsu 225202 (CN)**

(72) Inventors:
• **YANG, Kaifu**
  **Yangzhou, Jiangsu 225202 (CN)**
• **TANG, Hao**
  **Yangzhou, Jiangsu 225202 (CN)**
• **LIU, Ke**
  **Yangzhou, Jiangsu 225202 (CN)**
• **ZHANG, Yuhang**
  **Yangzhou, Jiangsu 225202 (CN)**
• **LI, Xuefa**
  **Yangzhou, Jiangsu 225202 (CN)**
• **ZHANG, Guoping**
  **Yangzhou, Jiangsu 225202 (CN)**

(74) Representative: **Comoglio, Elena et al**
**Jacobacci & Partners S.p.A.**
**Corso Emilia 8**
**10152 Torino (IT)**

(54) **FLAME-RETARDANT COMPOSITE CURRENT COLLECTOR, BATTERY, AND ELECTRIC DEVICE**

(57) The present application relates to the technical field of batteries. The present application provides a flame-retardant composite current collector, comprising a base film layer and a metal layer. The base film layer comprises an organic polymeric material. The metal layer is arranged on at least one surface of the base film layer, and the metal layer comprises a first metal layer, a second metal layer, and a third metal layer successively stacked on the base film layer. First metal particles are provided in the first metal layer, second metal particles are provided in the second metal layer, and third metal particles are provided in the third metal layer; and the particle size D1 of the first metal particles, the particle size D2 of the second metal particles, and the particle size D3 of the third metal particles satisfy the following relationships: $D1 \leq D2$, and $D1 < D3$. According to the composite current collector, the thermal conductivity and flame resistance of the composite current collector can be improved, thereby improving the safety performance of a battery comprising the composite current collector and the safety performance of an electric device.

**EP 4 621 885 A1**

# EP 4 621 885 A1

## Description

TECHNICAL FIELD

The present application relates to the field of battery technology, and in particular to a flame-retardant composite current collector, a battery, and an electric device.

## BACKGROUND

Lithium batteries have attracted widespread attention due to the advantages of long cycle life, energy conservation and being environmentally friendly. In recent years, the requirement for environmental protection and energy conservation is increasing at the social and national level, thus putting forward higher requirements on the energy density and safety performance of lithium batteries. Current collector is one of the important parts of batteries, which can collect the current generated by the electrode active material to form a larger current for outputting. Currently, most lithium batteries on the market use aluminum foils (positive electrode) and copper foils (negative electrode) as current collectors, but such metal foil collectors have limited ductility and high mass specific gravity. In addition, the high price of copper foils increases the cost of lithium batteries.

Composite current collector can overcome the problem of poor ductility and high mass specific gravity of conventional metal foil current collectors. The composite current collector usually comprises a base film layer and a metal layer arranged on the surface of the base film layer, where the base film layer usually comprises an organic polymer material, thus enhancing the ductility of the current collector. The metal layer comprises an aluminum coating or a copper coating, which conducts electricity. However, for the conventional composite current collector, due to the low melting point of the organic polymer material in the base film layer, the thermal conductivity and flame retardancy of the whole composite current collector are relatively poor. When the battery is heated, the composite current collector is prone to combustion, causing the battery to fire or even explode, which will have serious impact on the safety of batteries and the electrical devices containing the above composite current collector.

Therefore, how to improve the thermal conductivity and flame retardancy of composite current collector has become an urgent problem to be solved.

## SUMMARY

In view of the above, the present application provides a flame-retardant composite current collector, a battery, and an electric device, and the flame-retardant composite current collector has high thermal conductivity and flame retardancy, which is conducive to improving the safety performance of batteries and electrical devices containing the flame-retardant composite current collector.

In a first aspect, the present application provides a flame-retardant composite current collector, which comprises a base film layer and a metal layer. The base film layer comprises an organic polymer material. The metal layer is arranged on at least one surface of the base film layer, and the metal layer comprises a first metal layer, a second metal layer, and a third metal layer which are sequentially stacked on the base film layer. The first metal layer contains first metal particles, the second metal layer contains second metal particles, and the third metal layer contains third metal particles. A particle size D1 of the first metal particles, a particle size D2 of the second metal particles, and a particle size D3 of the third metal particles satisfy the following condition: $D1 \leq D2$, and $D1 < D3$.

In the present application, metal layers with different particle sizes are arranged on the base film layer, and the first metal layer close to the base film layer has a small particle size, so that the first metal layer has high compactness, and can effectively transfer the heat of the base film layer to outside and prevent the base film layer from combustion, thus improving the thermal conductivity and flame retardancy of the whole composite current collector. Furthermore, the particle sizes of different metal layers satisfy the above condition, so that the thermal conductivity and flame retardancy of different regions in the composite current collector are different, and the thermal conductivity and flame retardancy of different regions in the composite current collector can be improved differentially as desired. In addition, the metal particles in the third metal layer far from the base film layer has large particle size, which can increase the surface roughness of the composite current collector, and enhance the bonding strength between the composite current collector and the electrode active material coated on its surface, thus preventing the electrode active material from peeling off, and further enhancing the electrical conductivity of the composite current collector.

In some embodiments, $30 \text{ nm} \leq D1 \leq 80 \text{ nm}$, $30 \text{ nm} \leq D2 \leq 90 \text{ nm}$, and $80 \text{ nm} \leq D3 \leq 120 \text{ nm}$.

In some embodiments, by mass percentage, the first metal layer comprises 99.3-100% of the first metal particles, the second metal layer comprises 99.1-100% of the second metal particles, and the third metal layer comprises 98.7-100% of the third metal particles.

In some embodiments, the second metal layer comprises a plurality of sub-layers, and the plurality of sub-layers are sequentially stacked between the first metal layer and the third metal layer. The second metal layer has 7-10 sub-layers.

In some embodiments, the first metal layer is one layer, the third metal layer is one layer, and the total number of metal layers is 9-12.

In some embodiments, an intermediate layer is arranged between at least two adjacent sub-layers of the second metal layer, the intermediate layer also comprises second metal particles, and a particle size of the second metal particles in the intermediate layer is smaller than a particle size of the second metal particles in the other sub-layers.

In some embodiments, thicknesses of the first metal layer, the sub-layers and the third metal layer are each independently 30-120 nm.

In some embodiments, the first metal layer, the sub-layers, and the third metal layer have the same thickness.

In some embodiments, by mass percentage, the first metal layer, the second metal layer, and the third metal layer each independently comprise 98.7-99.8% of a metal main material, 0-0.6% of a conductive agent, and 0.2-0.7% of a flame retardant.

In some embodiments, the metal main material comprises copper or aluminum, the flame retardant comprises magnesium oxide, silicon nitride, aluminum nitride, zirconium oxide and beryllium oxide, or a combination thereof, and the conductive agent comprises graphite, graphene and carbon powder, or a combination thereof.

In some embodiments, the flame retardant in the first metal layer is 0.6-0.7% by mass percentage.

In some embodiments, a mass percent content of the flame retardant in the first metal layer is larger than a mass percent content of the flame retardant in the third metal layer.

In some embodiments, the conductive agent in the third metal layer is 0.5-0.6% by mass percentage.

In some embodiments, mass percent contents of the conductive agents in the first metal layer and the second metal layer are less than a mass percent content of the conductive agent in the third metal layer.

In some embodiments, the first metal layer does not contain a conductive agent.

In some embodiments, a thickness of the base film layer is 4-6 $\mu$m.

In some embodiments, the organic polymer material comprises polybutylene terephthalate, polypropylene, polyethylene, polyvinyl chloride, polyester, or polyurethane.

In a second aspect, the present application provides a battery, which comprises the flame-retardant composite current collector according to the first aspect.

In a third aspect, the present application provides an electric device, which comprises the battery according to the second aspect.

## DETAILED DESCRIPTION

The technical solutions in examples of the present application will be described clearly and completely hereinafter with the accompanying drawings in the examples of the present application. Obviously, the described examples are only a portion of examples of the present application but not all of the examples. Based on the embodiments in the present application, all other examples obtained by the person skilled in the art without creative efforts shall fall within the protection scope of the present application.

In order to more clearly illustrate the above objects, features and advantages of the present application, the specific embodiments of the present application are described in detail below. Many specific details are described in the following description to facilitate a full understanding of the present application. However, the present application can be implemented in many other ways that differ from those described herein, and similar improvements can be made by those skilled in the art without departing from the contents of the present application, so that the present application is not limited by the specific examples disclosed below.

In the description of the present application, it should be understood that orientation or position relationship indicated by the terms, such as "center", "longitudinal", "lateral", "length", "width", "thickness", "up", "down", "front", "back", "left", "right", "middle", "vertical", "horizontal", "top", "bottom", "inside", "outside", "clockwise", "counterclockwise", "axial", "radial", "circumferential", etc., are only intended to facilitate the description of the present application and to simplify the description, but not to indicate or imply that the device or element referred to must have a particular orientation or must be constructed and operated in a specific orientation, and therefore cannot be construed as a limitation of the present application.

In addition, terms such as "first" and "second" are used only for descriptive purposes and cannot be understood as indicating or implying relative importance or implicitly specifying the number of technical features referred to. Thus, features defined by "first" and "second" can explicitly or implicitly comprise at least one of the features. In the description of the present application, unless otherwise defined, "a plurality of" means at least two, such as two or three.

In the present application, unless otherwise expressly specified and limited, the first feature being "above" or "below" the second feature may refer to a direct contact between the first feature and the second feature, or an indirect contact between the first feature and the second feature through an intermediate medium. Furthermore, the first feature being "over", "above" and "on" the second feature may refer to that the first feature is directly above or diagonally above the second feature, or simply refer to that the level of the first feature is higher than that of the second feature. The first feature being "below", "under" and "underneath" the second feature may refer to that the first feature is directly below or diagonally below the second feature, or may simply refer to that the level of the first feature is lower than the level of the second feature.

It should be noted that when an element is described as being "fixed to" or "set on" another element, it may be directly on the other element or there may be an intermediate element. When an element is described as being "attached" to another element, it may be directly attached to the other element or there may be an intermediate element. The terms "vertical", "horizontal", "up", "down", "left", "right" and similar expressions used herein are only for the purpose of illustration but not indicate the only way for implementation.

Unless otherwise defined, all technical terms and scientific terms used herein have the same meanings as commonly understood by those skilled in the art to which the present application belongs. Terms used herein in the specification of the present application are used only for describing the specific examples and are not intended to limit the present application. The term "and/or" as used herein comprises any and all combinations of one or more of the relevant listed items.

In recent years, lithium batteries has been commonly used in electric devices, energy storage devices and power devices. The lithium batteries usually comprises a positive electrode, a separator, a negative electrode, and an electrolyte, in which the positive electrode and the negative electrode comprise their respective electrode active material and current collector. The current collector is used to carry the electrode active material, and can collect the current generated by the electrode active material and output to the outside. Therefore, the current collector has a significant impact on the battery performance.

Aluminum foil is usually used as the positive current collector in conventional technology. At present, the thickness of the aluminum foil for practical application is more than or equal to 10 $\mu$m. Most of the battery companies use the aluminum foil with a thickness of 12 $\mu$m and a gram weight in the range of $35.2\pm1.5$ g/m$^2$; the mass specific gravity is high and cannot meet the current market requirements of lightweight lithium-ion batteries. In addition, the aluminum foil has a limited processing ductility. The conventional production process of aluminum foil generally comprises rolling process, hot rolling, and casting and rolling process, so the aluminum foil is prone to tape breakage in the process of processing and manufacturing. The negative current collector usually adopts a copper foil which has a thickness of more than or equal to 6 $\mu$m, a gram weight in the range of $52.0\pm2.0$ g/m$^2$, and the mass specific gravity is relatively high. The processing ductility of the copper foil is also relatively limited, and the problem of tape breakage is also easy to occur in actual production. In addition, the uneven global distribution of copper resources and high price of copper lead to the high cost of copper foil current collectors.

Compared to aluminum foil current collectors and copper foil current collectors, the composite current collector has received much attention because of low mass specific gravity and better ductility. A composite current collector usually comprises a flexible organic substrate (i.e., a base film layer) and a conductive layer (usually a metal layer or a carbon layer) arranged on the surface of the organic substrate. However, when organic materials are used as the substrate, the safety risk of the battery will be increased because most of the organic materials are flammable. Aiming at this problem, there are two common solutions in the conventional technology. The first solution is to add a flame retardant to the organic substrate, and although this solution can solve the inflammable problem of the organic substrate to a certain extent, the actual improvement on the flame retardant effect is relatively limited, because the flame retardant is usually small inorganic particles which is difficult to be dispersed uniformly in the organic substrate. More importantly, the addition of the flame retardant reduces the ductility of the substrate and affects the processing performance of the composite current collector. The second solution is to coat a flame retardant layer on the surface of the substrate, and since the whole thickness of the composite current collector is required to meet the size requirement, the introduction of flame retardant layer reduces the thickness of the conductive layer and affects the conductive performance of the composite current collector.

It has been found by research that the reason why the flame retardancy of the composite current collector is difficult to meet the requirements of practical application is mainly because the location of the flame retardant lacks targeted arrangement in the composite current collector. Based on the above analysis, the present application provides a flame-retardant composite current collector with a multilayer structure, and through the design of the components and structure of different layers, the flame retardancy and thermal conductivity at different positions inside the composite current collector are improved differentially as desired, and the electrical conductivity and ductility can be taken into account at the same time.

One embodiment of the present application provides a flame-retardant composite current collector, which comprises a base film layer and a metal layer. The base film layer comprises an organic polymer material. The metal layer is arranged on at least one surface of the base film layer, and the metal layer comprises a first metal layer, a second metal layer, and a third metal layer which are sequentially stacked on the base film layer. The first metal layer contains first metal particles, the second metal layer contains second metal particles, and the third metal layer contains third metal particles. A particle size D1 of the first metal particles, a particle size D2 of the second metal particles, and a particle size D3 of the third metal particles satisfy the following condition: D1 $\leq$ D2, and D1 < D3.

The base film layer comprises an organic polymer material, which can provide certain flexibility to the composite current collector and enhance the ductility of the composite current collector. The organic polymer material comprises, but is not limited to, polybutylene terephthalate, polypropylene, polyethylene, polyvinyl chloride, polyester, or polyurethane; those materials are capable of providing a certain insulating effect. The manufacturing process of the base film layer comprises the steps of polymer-particle melt extruding, sheet casting, stretching and setting.

The metal layer comprises metal particles, the main component of which is metal or alloy. The metal layer can be arranged on one surface of the base film layer or on both surfaces of the base film layer, which is not limited in the present application. The first metal layer, the second metal layer, and the third metal layer are sequentially stacked on the surface of the base film layer, that is, the first metal layer is close to the base film layer, the third metal layer is away from the base film layer, and the second metal layer is arranged between the first metal layer and the third metal layer. The first metal layer, the second metal layer, and the third metal layer have different compositions or structures.

The first metal particles, the second metal particles, and the third metal particles are arranged in corresponding metal layers, respectively. It should be noted that in some specific examples, the metal particles not only contain metal, but may also contain other components (e.g., a flame retardant), wherein the metal is the main component. For example, the first metal particles contain 99.3% of copper and 0.7% of magnesium oxide (flame retardant) by mass percentage. D1, D2, and D3 refer to an average diameter of the corresponding metal particles. Exemplarily, D1, D2, and D3 can be obtained by the following process: the surface of the corresponding metal layer is observed by scanning electron microscope to acquire the particle sizes of multiple particles by the measurement function of the electron microscope, and then the average particle size is calculated based on the particle size data. The present application does not limit the specific testing method of particle size, and other methods that can obtain the particle size of the metal particles are also applicable to the present application.

"$D1 \leq D2$, and $D1 < D3$" can mean that the first metal layer close to the base film layer has small metal particles, and the third metal layer away from the base film layer has large metal particles. Specific embodiments satisfying the above condition comprise, but are not limited to, the following:

    1. $D1 < D2 < D3$, e.g. D1 is 80 nm, D2 is 90 nm, and D3 is 115 nm; and

    2. $D1 = D2$ and $D1 < D3$, e.g. D1 is 80 nm, D2 is 80 nm, and D3 is 115 nm.

In the present application, metal layers with different particle sizes are arranged on the base film layer, and the particle size of the first metal layer close to the base film layer is small, so that the compactness of the first metal layer is high, which can effectively transfer the heat of the base film layer to outside and prevent the base film layer from combustion, thus improving the thermal conductivity and flame retardancy of the whole composite current collector. Furthermore, the particle sizes of different metal layers satisfy the above condition, so that the thermal conductivity and flame retardancy of different regions in the composite current collector are different, and the thermal conductivity and flame retardancy of different regions in the composite current collector can be improved differentially as desired. In addition, the metal particles in the third metal layer far from the base film layer has large particle size, which can increase the surface roughness of the composite current collector, and enhance the bonding strength between the composite current collector and the electrode active material coated on its surface, thus preventing electrode active material from peeling off and further enhancing the electrical conductivity of the composite current collector.

In a specific embodiment, $30\,nm \leq D1 < 80\,nm$, $30\,nm \leq D2 \leq 90\,nm$, and $80\,nm \leq D3 \leq 120\,nm$. Specifically, D1 can be 30 nm, 40 nm, 50 nm, 60 nm, 70 nm, or 80 nm. D2 can be 30 nm, 40 nm, 50 nm, 60 nm, 70 nm, 80 nm, or 90 nm. D3 can be 80 nm, 90 nm, 100 nm, 110 nm, 115 nm, or 120 nm. It should be noted that the values of D1, D2, and D3 are still required to satisfy the condition of "$D1 \leq D2$, and $D1 < D3$".

By setting the particle sizes of metal particles in different metal layers, the different metal layers have different compactness, porosities, and surface roughness, which improves the flame retardancy, wettability and bonding strength with the electrode active material of the composite current collector.

In some embodiments, by mass percentage, the first metal layer comprises 99.3-100% of the first metal particles, the second metal layer comprises 99.1-100% of the second metal particles, and the third metal layer comprises 98.7-100% of the third metal particles. Specifically, the first metal layer comprises 99.3%, 99.4%, 99.5%, 99.6%, 99.7%, 99.8%, 99.9%, or 100% of the first metal particles; the second metal layer comprises 99.1%, 99.2%, 99.3%, 99.4%, 99.5%, 99.6%, 99.7%, 99.8%, 99.9%, or 100% of the second metal particles; and the third metal layer comprises 98.7%, 98.8%, 98.9%, 99.0%, 99.1%, 99.2%, 99.3%, 99.4%, 99.5%, 99.6%, 99.7%, 99.8%, 99.9%, or 100% of the third metal particles.

In some embodiments, the second metal layer comprises a plurality of sub-layers, and the plurality of sub-layers are sequentially stacked between the first metal layer and the third metal layer. The second metal layer has 7 to 10 sub-layers, which means that the second metal layer has a multi-layer structure, and specifically, the second metal layer has 7, 8, 9, or 10 sub-layers. It should be noted that the above total number of layers refers to a sum of the number of the first metal layer, the number of the sub-layers in the second metal layer, and the number of the third metal layer, rather than the sum of the number of the first metal layer, the number of the second metal layer, and the number of the third metal layer.

In some embodiments, the first metal layer is one layer, and/or the third metal layer is one layer, and the total number of metal layers is 9-12. It could be understood that when the second metal layer has 7, 8, 9, or 10 sub-layers, the corresponding total number of metal layers is 9, 10, 11, or 12.

By arranging the number of the metal layer, the thickness of the composite current collector can meet the requirements for practical application. When there are too few layers, in order to meet the thickness requirement of the composite current collector in actual design, the thickness of each layer is required to be increased, which will increase the processing difficulty. When there are too many layers, the thickness of each layer needs to be controlled highly accurately, which will increase the complexity of operation and manufacturing costs.

In some embodiments, an intermediate layer is arranged between at least two adjacent sub-layers of the second metal layer, the intermediate layer also comprises the second metal particles, and a particle size of the second metal particles in the intermediate layer is smaller than a particle size of the second metal particles in the other sub-layers. It should be noted that the intermediate layer can be located in the middle of the second metal layer or in other position, which is not limited in the present application. For example, in the second metal layer having ten sub-layers, the intermediate layer can be the fifth sub-layer in the second metal layer, or other layers.

The intermediate layer arranged in the sub-layers can improve the bonding strength between adjacent sub-layers, and in turn improve the mechanical strength of the composite current collector.

In some embodiments, thicknesses of the first metal layer, the sub-layers, and the third metal layer are each independently 30 to 120 nm. Specifically, the thicknesses of the first metal layer, the sub-layers, and the third metal layer are each independently selected from 30 nm, 40 nm, 50 nm, 60 nm, 70 nm, 80 nm, 90 nm, 100 nm, 110 nm, or 120 nm.

In some embodiments, the first metal layer, the sub-layers and the third metal layer have the same thickness. The first metal layer, the sub-layers, and the third metal layer having the same thickness can simplify the actual production and manufacturing process, thus increasing the production efficiency.

In some embodiments, by mass fraction, the first metal layer, the second metal layer, and the third metal layer each independently comprise the following components: 98.7-99.8% of a metal main material, 0-0.6% of a conductive agent, and 0.2-0.7% of a flame retardant. Specifically, by mass percentage, the metal main material can be 98.7%, 98.8%, 98.9%, 99.0%, 99.1%, 99.2%, 99.3%, 99.4%, 99.5%, 99.6%, 99.7%, or 99.8%; the conductive agent can be 0%, 0.1%, 0.2%, 0.3%, 0.4%, 0.5%, or 0.6%; and the flame retardant can be 0.2%, 0.3%, 0.4%, 0.5%, 0.6%, or 0.7%. It should be noted that at least one component has different mass percent contents in the first metal layer, the second metal layer, and the second metal. For example, the first metal layer comprises 99.3% of the metal main material and 0.7% of the flame retardant, the second metal layer comprises 99.3% of the metal main material, 0.3% of the conductive agent and 0.4% of the flame retardant, and the third metal layer comprises 99.2% of the metal main material, 0.6% of the conductive agent, and 0.2% of the flame retardant.

By arranging the component contents of the different metal layers, the first metal layer close to the base film layer has better flame retardancy and thermal conductivity, while the third metal layer far away from the base film layer has better electrical conductivity. It means that in this embodiment, the flame retardancy and electrical conductivity are improved differentially at different positions of the composite current collector purposefully, which can better meet the needs of practical applications.

In some embodiments, the metal main material comprises copper or aluminum, the flame retardant comprises magnesium oxide, silicon nitride, aluminum nitride, zirconium oxide and beryllium oxide, or a combination thereof, and the conductive agent comprises graphite, graphene and carbon powder or a combination thereof. It should be noted that the metal main material can be pure metal (e.g., pure copper) or a corresponding alloy (e.g., aluminum alloy). When the composite current collector is used as a positive current collector, the metal main material comprises aluminum; when the composite current collector is used as a negative current collector, the metal main material comprises copper. Aluminum has a low deformation resistance, high electrical conductivity, and good plasticity, and copper has good ductility, heat transfer performance, and electrical conductivity.

In some embodiments, the flame retardant in the first metal layer is 0.6-0.7% by mass percentage. Specifically, the flame retardant in the first metal layer can be 0.6%, 0.65%, or 0.7%.

In some embodiments, a mass percent content of the flame retardant in the first metal layer is larger than a mass percent content of the flame retardant in the third metal layer. For example, by mass percentage, the flame retardant in the first metal layer is 0.7% and the flame retardant in the third metal layer is 0.2%.

By arranging the flame retardant content of different metal layers, the first metal layer close to the combustible base film layer contains more flame retardant, which can further improve the thermal conductivity and flame retardancy of the metal layer aiming at the base film layer. The third metal layer, which is far from the base film layer, has a small contribution to the flame retardancy of the whole composite current collector, and therefore its flame retardant content is relatively low.

In some embodiments, the conductive agent in the third metal layer is 0.5-0.6% by mass percentage. Specifically, the conductive agent in the third metal layer can be 0.5%, 0.55%, or 0.6%.

In some embodiments, mass percent contents of the conductive agents in the first metal layer and the second metal layer are both less than a mass percent content of the conductive agent in the third metal layer.

In some embodiments, the first metal layer does not contain a conductive agent. For example, by mass percentage, the conductive agent in the first metal layer is 0 and the conductive agent in the third metal layer is 0.6%.

Different metal layers are provided with different contents of the conductive agent and a higher mass percent content of the conductive agent is arranged in the third metal layer far away from the base film layer, which is beneficial to the transport of electrons generated by the electrode active material, and effectively enhances the electrical conductivity of the composite current collector. The first metal layer has a small contribution to the electrical conductivity of the whole composite current collector, and therefore the first metal layer can be not added with the conductive agent. In this way, more flame retardant can be added to the first metal layer, improving the flame retardancy of the composite current collector.

In some embodiments, a thickness of the base film layer is 4-6 $\mu$m. Specifically, the thickness of the base film layer is 4 $\mu$m, 4.5 $\mu$m, 5 $\mu$m, 5.5 $\mu$m, or 6 $\mu$m.

By setting the thickness of the base film layer, the flexibility of the composite current collector is ensured, thereby improving the ductility of the composite current collector.

In some embodiments, the organic polymer material comprises polybutylene terephthalate, polypropylene, polyethylene, polyvinyl chloride, polyester, or polyurethane.

Each metal layer in the composite current collector of the present application can be deposited on the base film layer or the adjacent metal layer by vacuum deposition, sputtering coating or ion plating, etc., and the present application does not limit the specific preparation method of the metal layer. The specific processing parameters and conditions are required to be selected according to the evaporation temperature and properties of the raw materials, which are not limited in the present application. In the specific preparation process, the metal main material, the conductive agent, and the flame retardant are converted to a gaseous state and mixed with each other under certain conditions (e.g., high temperature), and subsequently deposited as particles on the base film layer or the adjacent metal layer. Exemplarily, a certain mass percentage of the metal main material and flame retardant are added to the production device, and the metal main material and the flame retardant are evaporated in the form of atomic clusters or ions by vacuum deposition, and the gaseous metal main material and flame retardant are mixed and then deposited on the surface of the base film layer to form the first metal particles, and after being deposited to a certain thickness, the first metal layer containing the first metal particles is obtained.

By vacuum deposition, sputtering coating, or ion plating, high energy is utilized to subject the metal main material, flame retardant, and conductive agent to vapor deposition, so that the formed metal layer has good adhesion with the base film layer or other metal layers.

Another embodiment of the present application provides a battery, which comprises the flame-retardant composite current collector as described above.

Furthermore, the present application provides an electric device, which comprises the battery as described above. The electric device can be, but is not limited to, a mobile device (e.g., cell phone or laptop), an electric vehicle (e.g., a pure electric car, a hybrid electric car, a plug-in hybrid electric car, an electric bicycle, an electric scooter, or an electric truck, etc.), an electric train, a ship and a satellite, or an energy storage system, etc.

In order to understand and implement the present application more easily, easily implementable and more detailed specific examples and comparative examples are provided below as references. Based on the description and the performance result of specific examples and comparative examples, various embodiments of the present application and their advantages will be apparent.

Unless otherwise specified, the raw materials used in the following test examples are commercially available.

**Example 1**

A 4.0 $\mu$m polybutylene terephthalate polymer film was selected as a base film layer, and the two surfaces of the base film layer were deposited with metal layers by the vacuum deposition independently, wherein the total number of metal layers on a single side was 12. It should be noted that when the metal main material is aluminum, the flame-retardant composite current collector is used as a positive current collector of the battery. When the metal main material is copper, the flame-retardant composite current collector is used as a negative current collector of the battery. Except for the metal main material, the other components of the positive current collector and the negative current collector are the same. Specific parameters are shown in Table 1.

Table 1 Component and structural parameters of metal layers of the flame-retardant composite current collector in Example 1

| | Component of metal layer (by mass percentage, %) | | | Corresponding metal particle size (nm) |
|---|---|---|---|---|
| | Metal main material | Conductive agent | Flame retardant | |
| | Copper/aluminum | Graphite | Magnesium oxide | |
| The first metal layer | 99.3 | 0.0 | 0.7 | 80 |
| The second metal layer (the first to fourth sub-layers) | 99.3 | 0.3 | 0.4 | 90 |
| The second metal layer (the fifth sub-layer) | 99.3 | 0.3 | 0.4 | 80 |
| The second metal layer (the sixth to tenth sub-layers) | 99.3 | 0.3 | 0.4 | 95 |
| The third metal layer | 99.2 | 0.6 | 0.2 | 115 |

**Example 2**

Example 2 is basically the same as Example 1, and the difference is the component of the metal layer and the particle size of the metal particles. Specific parameters are shown in Table 2.

Table 2 Component and structural parameters of metal layers of the flame-retardant composite current collector in Example 2

| | Component of metal layer (by mass percentage, %) | | | Corresponding metal particle size (nm) |
|---|---|---|---|---|
| | Metal main material | Conductive agent | Flame retardant | |
| | Copper/aluminum | Graphite | Magnesium oxide | |
| The first metal layer | 99.4 | 0.0 | 0.6 | 80 |
| The second metal layer (the first to fourth sub-layers) | 99.5 | 0.2 | 0.3 | 90 |
| The second metal layer (the fifth sub-layer) | 99.6 | 0.2 | 0.2 | 80 |
| The second metal layer (the sixth to tenth sub-layers) | 99.5 | 0.2 | 0.3 | 95 |
| The third metal layer | 99.3 | 0.5 | 0.2 | 115 |

**Example 3**

Example 3 is basically the same as Example 1, and the difference is the component of the metal layer and the particle size of the metal particles. Specific parameters are shown in Table 3.

Table 3 Component and structural parameters of metal layers of the flame-retardant composite current collector in Example 3

| | Component of metal layer (by mass percentage, %) | | | Corresponding metal particle size (nm) |
|---|---|---|---|---|
| | Metal main material | Conductive agent | Flame retardant | |
| | Copper/aluminum | Graphite | Magnesium oxide | |
| The first metal layer | 99.4 | 0.0 | 0.6 | 30 |
| The second metal layer (the first to fourth sub-layers) | 99.3 | 0.3 | 0.4 | 80 |
| The second metal layer (the fifth sub-layer) | 99.1 | 0.3 | 0.6 | 30 |
| The second metal layer (the sixth to tenth sub-layers) | 99.3 | 0.3 | 0.4 | 80 |
| The third metal layer | 99.2 | 0.6 | 0.2 | 115 |

**Example 4**

Example 4 is basically the same as Example 1, and the difference is the component of the metal layer and the particle size of the metal particles. Furthermore, in Example 4, the components of each sub-layer and the particle sizes of the metal particles are the same in the second metal layer. Specific parameters are shown in Table 4.

Table 4 Component and structural parameters of metal layers of the flame-retardant composite current collector in Example 4

| | Component of metal layer (by mass percentage, %) | | | Corresponding metal particle size (nm) |
|---|---|---|---|---|
| | Metal main material | Conductive agent | Flame retardant | |
| | Copper/aluminum | Graphite | Magnesium oxide | |
| The first metal layer | 99.3 | 0.0 | 0.7 | 30 |
| The second metal layer (the first to tenth sub-layers) | 99.6 | 0.0 | 0.4 | 90 |
| The third metal layer | 98.7 | 0.6 | 0.7 | 80 |

**Example 5**

Example 5 is basically the same as Example 3, and the difference is the type of flame retardant and the particle size of the metal particles. Specific parameters are shown in Table 5.

Table 5 Component and structural parameters of metal layers of the flame-retardant composite current collector in Example 5

| | Component of metal layer (by mass percentage, %) | | | Corresponding metal particle size (nm) |
|---|---|---|---|---|
| | Metal main material | Conductive agent | Flame retardant | |
| | Copper/aluminum | Graphite | Silicon nitride | |
| The first metal layer | 99.4 | 0.0 | 0.6 | 30 |
| The second metal layer (the first to fourth sub-layers) | 99.3 | 0.3 | 0.4 | 80 |

(continued)

| | Component of metal layer (by mass percentage, %) | | | Corresponding metal particle size (nm) |
|---|---|---|---|---|
| | Metal main material | Conductive agent | Flame retardant | |
| | Copper/aluminum | Graphite | Silicon nitride | |
| The second metal layer (the fifth sub-layer) | 99.1 | 0.3 | 0.6 | 30 |
| The second metal layer (the sixth to tenth sub-layers) | 99.3 | 0.3 | 0.4 | 80 |
| The third metal layer | 99.2 | 0.6 | 0.2 | 110 |

**Comparative Example**

In Comparative Example 1, the conventional aluminum foil was used; in Comparative Example 2, the conventional copper foil was used.

**Performance Test**

Thickness, surface density, tensile strength, elongation, and surface temperature rise of the above examples and comparative examples were tested. Thickness, surface density, tensile strength, and elongation were tested with the methods documented in GB/T 22638.1-2016 and GB/T 3198-2010. Surface temperature rise was tested using a real-time temperature tester, where the thermocouple sensing probe of the temperature tester was placed on the surface of the batteries prepared in examples and comparative examples, and real-time temperature detection was performed, and the maximum surface temperature rise was calculated. Sheet resistance was tested with an HPS2524/2526 precision square resistance tester.

The test results are summarized in Tables 6 and 7.

Table 6 Performance Comparison of the flame-retardant composite current collector as a positive electrode collector and the aluminum foil

| | Thickness ($\mu$m) | Surface density (g/cm$^3$) | Tensile strength (MPa) | Elongation (%) | Surface temperature rise (°C/min) | Sheet resistance (m$\Omega$*□) |
|---|---|---|---|---|---|---|
| Example 1 | 6 | 8.5 | 230 | 70 | 2.2 | 2.0 |
| Example 2 | 6 | 8.5 | 225 | 70 | 2.8 | 2.2 |
| Example 3 | 5.5 | 6.9 | 215 | 64 | 3.3 | 2.4 |
| Example 4 | 6 | 8.5 | 228 | 68 | 2.6 | 2.5 |
| Example 5 | 6 | 8.7 | 220 | 61 | 2.6 | 2.5 |
| Comparative Example 1 | 12 | 35.08 | 200 | 5.64 | 5.6 | 3.1 |

As can be seen from Table 6, for the flame-retardant composite current collector in Examples 1-5, the tensile strength is within the range of 215-230 MPa, and the elongation is within the range of 61-70%, which indicates that each flame-retardant composite current collector in the above examples has a good ductility. The surface temperature rise of the flame-retardant composite current collector in Examples 1-5 is within the range of 2.2-3.3°C/min, which indicates that each flame-retardant composite current collector in the above examples has a good thermal conductivity and flame retardancy. The flame-retardant composite current collector of Example 1 has the best comprehensive performance. In Example 2 and Example 1, the particle sizes of the metal particles in each metal layer are the same, but the flame retardant in each metal layer in Example 2 is less; thus its surface temperature rise is higher, and the flame retardant effect is inferior to that of Example 1; in addition, in Example 2, the metal main material in each metal layer is more, and thus the tensile strength is inferior to that of Example 1. In Example 3, the particle size of the metal particles in each metal layer is smaller compared to that in Example 1, and therefore, the thickness and surface density of the flame-retardant composite current collector obtained in Example 3 are lower, so that the tensile strength and elongation are lower, the surface temperature rise is higher, and the comprehensive performance is inferior to that of Example 1. The sub-layers of second metal layer of Example 4 have the same component and the same particle size of the second metal particles, and the tensile strength and elongation are similar to thoses of Example 1, but the surface temperature rise is slightly higher, which indicates that the sub-layers with the same component and particle size of the metal particles may reduce the flame retardancy of the composite current collector. In Example 5, silicon nitride is used as a flame retardant, and compared to Example 3 where magnesium oxide is used as a flame retardant, the surface temperature rise is smaller but the elongation is reduced in Example 5.

In Comparative Example 1, the tensile strength is 200 MPa, and the elongation is only 5.64%. With respect to the flame retardancy, the surface temperature rise in Comparative Example 1 is 5.6°C/min, which indicates that the flame-retardant composite current collector of the present application can significantly improve the flame retardancy and thermal conductivity of the positive current collector compared with the conventional aluminum foil. In addition, because the thickness and the surface density of Examples 1-5 are significantly lower than those of Comparative Example 1, the flame-retardant composite current collector of the present application has a significantly lower mass compared to the conventional aluminum foil current collector, which can improve the energy density of the battery comprising the same.

Table 7 Performance comparison of the flame-retardant composite current collector as a negative electrode collector and the aluminum foil

| | Thickness ($\mu$m) | Surface density (g/cm$^3$) | Tensile strength (MPa) | Elongation (%) | Surface temperature rise (°C/min) | Sheet resistance (m$\Omega$*$\square$) |
|---|---|---|---|---|---|---|
| Example 1 | 6 | 24.1 | 250 | 80 | 3.5 | 2.42 |
| Example 2 | 6 | 24 | 240 | 80 | 4.3 | 2.53 |
| Example 3 | 5.5 | 22.6 | 235 | 74 | 2.5 | 2.25 |
| Example 4 | 6 | 24 | 246 | 77 | 3.5 | 2.44 |
| Example 5 | 6 | 22.9 | 240 | 73 | 3.4 | 2.37 |
| Comparative Example 2 | 6 | 52 | 230 | 6 | 6.04 | 2.87 |

As can be seen from Table 7, the tensile strength of the flame-retardant composite current collector in Examples 1-5 is within the range of 235-250 MPa, and the elongation is within the range of 73-80%, which indicates that each flame-retardant composite current collector in the above examples has a good ductility. The surface temperature rise of the flame-retardant composite current collector in Examples 1-5 is within the range of 2.5-4.3°C/min, which indicates that each flame-retardant composite current collector in the above examples has a good thermal conductivity and flame retardancy. The flame-retardant composite current collector of Example 1 has the best comprehensive performance. In Example 2 and Example 1, the particle sizes of the metal particles in each metal layer are the same, but the flame retardant in each metal layer in Example 2 is less; thus its surface temperature rise is higher, the flame retardant effect is inferior to that of Example 1; in addition, in Example 2, the metal main material in each metal layer is more, and thus the tensile strength is inferior to that of Example 1. In Example 3, the particle sizes of the metal particles in each metal layer are smaller compared to that in Example 1, and therefore, the thickness and surface density of the flame-retardant composite current collector obtained in Example 3 are lower, so that the tensile strength and elongation are lower, the surface temperature rise is lower, and because the fine particle size of the metal particles is lower, the packing volume voids are reduced, and the heat conduction is faster; meanwhile, the metal layer is denser and has better flame-retardant effect for the base film layer. The sub-layers of second metal layer of Example 4 have the same component and the same particle size of the second metal particles, the surface temperature rise is similar to that of Example 1, but the tensile strength and elongation are slightly lower, which indicates that the sub-layers with the same component and particle size of the metal particles may reduce the flexibility of the composite current collector due to the insufficient bonding strength between adjacent layers. In Example 5, silicon nitride is used as a flame retardant, and compared to Example 3 where magnesium oxide is used as a flame retardant, the surface temperature rise is smaller but the tensile strength and elongation are reduced in Example 5.

In Comparative Example 2, the tensile strength is 230 MPa, and the elongation is only 6%. With respect to the flame retardancy, the surface temperature rise in Comparative Example 2 is 6.04°C/min, which indicates that the flame-retardant composite current collector of the present application can significantly improve the flame retardancy and thermal conductivity of the negative current collector compared with the conventional copper foil. In addition, because the thickness and the surface density of Examples 1-5 are significantly lower than those of Comparative Example 2, the flame-retardant composite current collector of the present application has a significantly lower mass compared to the conventional copper foil current collector, which can improve the energy density of the battery comprising the same.

The various technical features of the above examples can be combined in any way, and in order to provide a concise description, possible combinations of the various technical features in the above examples have not been described exhaustedly; however, as long as the combination of these technical features has no contradiction, it should be considered to be within the scope of the present specification.

The above examples only express several embodiments of the present application, which are described in a more specific and detailed manner, but they are not to be construed as a limitation of the scope of the patent application. It should be noted that for the skilled person in the field, several deformations and improvements can be made without departing from the conception of the present application, which all fall within the protection scope of the present application. Therefore, the protection scope of the present application shall be subject to the claims.

**Claims**

1. A flame-retardant composite current collector, which comprises:

   a base film layer comprising an organic polymer material; and
   a metal layer which is arranged on at least one surface of the base film layer, wherein the metal layer comprises a first metal layer, a second metal layer, and a third metal layer which are sequentially stacked on the base film layer; the first metal layer contains first metal particles, the second metal layer contains second metal particles, and the third metal layer contains third metal particles; a particle size D1 of the first metal particles, a particle size D2 of the second metal particles, and a particle size D3 of the third metal particles satisfy the following condition:

$$D1 \leq D2, \text{ and } D1 < D3.$$

2. The flame-retardant composite current collector according to claim 1, wherein 30 nm $\leq$ D1 $\leq$ 80 nm, 30 nm $\leq$ D2 $\leq$ 90 nm, and 80 nm $\leq$ D3 $\leq$ 120 nm.

3. The flame-retardant composite current collector according to claim 1 or 2, wherein by mass percentage, the first metal layer comprises 99.3-100% of the first metal particles, the second metal layer comprises 99.1-100% of the second metal particles, and the third metal layer comprises 98.7-100% of the third metal particles.

4. The flame-retardant composite current collector according to any one of claims 1-3, wherein the second metal layer comprises a plurality of sub-layers, the plurality of sub-layers are sequentially stacked between the first metal layer and the third metal layer, and the second metal layer has 7-10 sub-layers.

5. The flame-retardant composite current collector according to claim 4, wherein the first metal layer is one layer, the third metal layer is one layer, and a total number of metal layers is 9-12.

6. The flame-retardant composite current collector according to claim 4 or 5, wherein an intermediate layer is arranged between at least two adjacent sub-layers of the second metal layer, the intermediate layer comprises second metal particles, and a particle size of the second metal particles in the intermediate layer is smaller than a particle size of the second metal particles in the other sub-layers.

7. The flame-retardant composite current collector according to any one of claims 4-6, wherein thicknesses of the first metal layer, the sub-layers, and the third metal layer are each independently 30-120 nm.

8. The flame-retardant composite current collector according to claim 7, wherein the first metal layer, the sub-layers, and the third metal layer have the same thickness.

9. The flame-retardant composite current collector according to any one of claims 1-8, wherein by mass percentage, the first metal layer, the second metal layer, and the third metal layer each independently comprise 98.7-99.8% of a metal main material, 0-0.6% of a conductive agent, and 0.2-0.7% of a flame retardant.

10. The flame-retardant composite current collector according to claim 9, wherein the metal main material comprises copper or aluminum, the flame retardant comprises magnesium oxide, silicon nitride, aluminum nitride, zirconium oxide, and beryllium oxide, or a combination thereof, and the conductive agent comprises graphite, graphene and carbon powder, or a combination thereof.

11. The flame-retardant composite current collector according to claim 9, wherein the flame retardant in the first metal layer is 0.6-0.7% by mass percentage.

12. The flame-retardant composite current collector according to any one of claims 9-11, wherein a mass percent content of the flame retardant in the first metal layer is larger than a mass percent content of the flame retardant in the third metal layer.

13. The flame-retardant composite current collector according to claim 9, wherein the conductive agent in the third metal layer is 0.5-0.6% by mass percentage.

14. The flame-retardant composite current collector according to claim 9 or 13, wherein mass percent contents of the conductive agents in the first metal layer and the second metal layer are both less than a mass percent content of the conductive agent in the third metal layer.

15. The flame-retardant composite current collector according to claim 13 or 14, wherein the first metal layer does not contain the conductive agent.

16. The flame-retardant composite current collector according to any one of claims 1-15, wherein a thickness of the base film layer is 4-6 $\mu$m.

17. The flame-retardant composite current collector according to any one of claims 1-16, wherein the organic polymer material comprises polybutylene terephthalate, polypropylene, polyethylene, polyvinyl chloride, polyester, or polyurethane.

18. A battery, which comprises the flame-retardant composite current collector according to any one of claims 1-17.

19. An electric device, which comprises the battery according to claim 18.

## INTERNATIONAL SEARCH REPORT

| International application No. |
| --- |
| **PCT/CN2022/132839** |

**A.  CLASSIFICATION OF SUBJECT MATTER**

H01M4/66(2006.01)i

According to International Patent Classification (IPC) or to both national classification and IPC

**B.  FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS, CNTXT, VEN, ENTXT, ENTXTC, CNKI: 电池, 集流体, 基膜, 基体, 基层, 金属层, 第一, 第二, 第三, 颗粒, 粒径, 阻燃, battery, current collector, base, membrane, layer, substrate, metal+, first, second, third, particle, size, diameter, flame retardant

**C.  DOCUMENTS CONSIDERED TO BE RELEVANT**

| Category* | Citation of document, with indication, where appropriate, of the relevant passages | Relevant to claim No. |
| --- | --- | --- |
| A | CN 114759192 A (JIANGSU HENGTONG PRECISION COPPER INDUSTRY CO., LTD.) 15 July 2022 (2022-07-15) <br> description, paragraphs 5-22 | 1-19 |
| A | CN 113707886 A (ZHEJIANG ROUZHEN TECHNOLOGY CO., LTD.) 26 November 2021 (2021-11-26) <br> entire document | 1-19 |
| A | CN 114864955 A (HEFEI GUOXUAN HIGH-TECH POWER ENERGY CO., LTD.) 05 August 2022 (2022-08-05) <br> entire document | 1-19 |
| A | CN 208433466 U (SHENZHEN QIANHAI YOURONG TECHNOLOGIES INC.) 25 January 2019 (2019-01-25) <br> entire document | 1-19 |
| A | WO 2022234908 A1 (LG ENERGY SOLUTION, LTD.) 10 November 2022 (2022-11-10) <br> entire document | 1-19 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 March 2023** | **22 March 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/132839**

| Patent document cited in search report | | | Publication date (day/month/year) | Patent family member(s) | | | Publication date (day/month/year) |
|---|---|---|---|---|---|---|---|
| CN | 114759192 | A | 15 July 2022 | None | | | |
| CN | 113707886 | A | 26 November 2021 | None | | | |
| CN | 114864955 | A | 05 August 2022 | None | | | |
| CN | 208433466 | U | 25 January 2019 | None | | | |
| WO | 2022234908 | A1 | 10 November 2022 | EP | 4109603 | A1 | 28 December 2022 |
| | | | | KR | 20220151898 | A | 15 November 2022 |

Form PCT/ISA/210 (patent family annex) (July 2022)